# EUROPÄISCHE PATENTSCHRIFT

(11) **EP 1 668 822 B1**
(45) Veröffentlichungstag und Bekanntmachung des Hinweises auf die Patenterteilung: **24.01.2007**
(21) Anmeldenummer: 04766850.4
(22) Anmeldetag: 24.09.2004
(51) Int. Cl.: H04L 12/24

(54) **VERFAHREN ZUR SYNCHRONISIERUNG VON ALARMEN IN EINEM MANAGEMENTSYSTEM EINES KOMMUNIKATIONSNETZES**
METHOD FOR SYNCHRONIZING ALARMS IN A MANAGEMENT SYSTEM OF A COMMUNICATIONS NETWORK
PROCEDE DE SYNCHRONISATION D'ALARMES DANS UN SYSTEME DE GESTION DE RESEAU DE COMMUNICATION

(30) Priorität: 30.09.2003 DE 10345881
(43) Veröffentlichungstag der Anmeldung: 14.06.2006
(73) Patentinhaber: SIEMENS AKTIENGESELLSCHAFT, 80333 München (DE)
(72) Erfinder: HIRSCH, Lucian, 81373 München (DE)
(86) Internationale Anmeldenummer: PCT/EP2004/052297
(87) Internationale Veröffentlichungsnummer: WO 2005/034428

(56) Entgegenhaltungen:
- WO-A-96/20547
- WO-A-99/59326
- DE-A1- 19 801 785
- US-A1- 2003 162 537

## Beschreibung

Die Erfindung betrifft ein Verfahren zur Behandlung von Alarmen in einem Managementsystem eines Kommunikationsnetzes nach dem Oberbegriff des Anspruchs 1.

Die Erfindung betrifft ferner einen Element Manager eines Managementsystems eines Kommunikationsnetzes zur Behandlung von Alarmen nach dem Oberbegriff des Anspruchs 8.

Die Erfindung betrifft schließlich ein Kommunikationssystem zur Behandlung von Alarmen durch ein Managementnetz nach dem Oberbegriff des Anspruchs 12.

Die Prinzipien des Management eines TelekommunikationsNetzes, die auch als TMN-Prinzipien (TMN: Telecommunications Management Network) bezeichnet werden, definieren mehrere Managementschichten für das Management des TelekommunikationsNetzes - beispielsweise eines Mobilfunk-Kommunikations-Netzes -, wobei jede Schicht mit Ausnahme der obersten und der untersten Schicht eine doppelte Funktion besitzt. Im managenden System ("managing system") übt jede Ebene außer der untersten eine Manager-Funktion für die darunterliegende Ebene aus. Im gemanagten System ("managed system") kommt jeder Ebene außer der obersten eine Agenten-Funktion für die nächsthöhere Schicht zu.

Einzelne Einrichtungen bzw. Elemente des TelekommunikationsNetzes (Netz-Ressourcen) üben in einer TMN-Hierarchie die Rolle eines Agenten aus. Agenten müssen relevante Ereignisse (sogenannte *events,* z.B. Alarme) im Netz möglichst rasch erkennen, ensprechende Mitteilungen - sogenannte *Notifications* - generieren und diese Ereignismeldungen (*event reports*) an Manager übertragen, um ein effizientes Netzmanagement zu ermöglichen.

Das Managementnetz eines Kommunikationsnetzes umfasst in der Regel zumindest zwei Managementeinrichtungen in verschiedenen Managementebenen, wobei mindestens eine der zumindest zwei Managementeinrichtungen als Element Manager und mindestens eine der zumindest zwei Managementeinrichtungen als dem Element Manager übergeordneter Netzwerk Manager fungieren.

Element Manager fungieren gegenüber einer tieferen Ebene als Manager und wirken im Hinblick auf die nächsthöhere Managementebene der Netzwerk Manager als Agenten.

Ein Manager startet zur Netzüberwachung und -kontrolle so genannte Operationen (*Requests,* die in Agenten ausgeführt werden) und erhalten entsprechende Rückmeldungen *(Responses).* Ein Agent erkennt relevante Netzereignisse (*Events,* z. B. Alarme), generiert Benachrichtigungen (so genannte Notificati*ons)* und überträgt diese als Ereignismeldungen (*Event Reports)* an den Manager, um ein effizientes Netzmanagement zu ermöglichen.

Ein solches Managementnetz für ein Mobil-Kommunikationsnetz mit Agent-Manager-Beziehung umfasst beispielsweise Betriebs- und Wartungszentren (OMC Operation and Maintenance Center) und mehrere Netzwerkmanagementzentren (NMC Network Management Center). Zusätzlich kann beispielsweise eine Managementebene des Managementnetzes, welche die Netzelementsebene ("Network Element Level") mit mehreren Basisstationssystemen enthält, vorgesehen sein. In der Netzelementsmanagementebene ("Network Element Management Level") können beispielsweise Betriebs- und Wartungszentren jeweils die herstellerspezifische Managementfunktionalität für beispielsweise einzelne Basisstationen des Basisstationssystems bereitstellen. In der Netzwerkmanagementebene ("Network Management Level") realisieren Netzwerkmanagementzentren jeweils eine integrierte, in der Regel vom Hersteller unabhängige Management-Funktionalität. Dabei können mehrere Netzwerkmanagementzentren einen Zugriff zu derselben Netzeinrichtung der nächstniedrigeren Managementebene, der Netzelementsmanagementebene ("Network Element Management Level"), haben, beispielsweise die Netzmanagementzentren zu mindestens einem Betriebs- und Wartungszentrum der nächstniedrigeren Managementebene.

Zwischen den Netzeinrichtungen unterschiedlicher Managementebenen sind üblicherweise definierte Schnittstellen zur Informationsübertragung bei der Manager-Agent Kommunikation vorgesehen, so genannte Management-Schnittstellen, die in einer objekt-orientierten Umgebung durch ein Kommunikationsprotokoll (z. B. CMIP (Common Management Information Protocol nach ITU-T X.711) oder CORBA (Common Object Request Broker Architecture)) und ein Objektmodell gekennzeichnet werden. Solche Schnittstellen gibt es beispielsweise zwischen Network *Element Management-* und *Network Element-Ebene* (z. B. OMC-BSS (BSS Basestation SubSystem) in einem GSM Mobilfunknetz) bzw. zwischen *Network Management-* und *Network Element Management-*Ebene (z.B. NMC-OMC).

Das optimale Management eines Telekommunikationsnetzes setzt voraus, dass nur die relevanten Ereignismeldungen aus den untergeordneten Agenten möglichst schnell an Manager-Systeme weitergeleitet werden. Unter Normalbedingungen, d. h. wenn die Kommunikation zwischen Agenten und Managern funktioniert, geschieht dies über einen im Agent vorhandenen Filtermechanismus (beispielsweise in einer CMIP-basierten Management-Schnittstelle mit Hilfe von *Event Forwarding Discriminators,* so genannten *EFDs,* gemäß ITU-T X.734 *"Systems Management: Event Report Management Function"*)*.*

Die Aufgabe dieser Filter ist es, durch entsprechende Tests nur diejenige Notifications zum Manager weiterzuleiten, welche bestimmten Kriterien genügen. Ein Manager ist in der Lage solche Filter im Agent einzurichten oder zu löschen und die Filterkriterien festzulegen. Dadurch kann jeder Manager zu jeder Zeit den Informationsfluss nach seinen individuellen Anforderungen steuern.

Das nachfolgend im Besonderen betrachtete Managementnetz umfasst zumindest zwei Managementeinrichtungen in verschiedenen Managementebenen, wobei mindestens eine der zumindest zwei Managementeinrichtungen als Element Manager und mindestens eine der zumindest zwei Managementeinrichtungen als dem Element Manager in dessen Funktion als Agent zu- und übergeordneter Netzwerk Manager fungieren.

Das Dokument DE 198 01 785 A1 beschreibt ein Verfahren zur Behandlung von Alarmen in einem Kommunikationssystem. Von einem Manager wird eine Nachricht, durch welche ein Alarmdatenabgleich angefordert wird, zu einem Agenten gesendet. Die Nachricht enthält einen Parameter, durch welchen der Alarmdatenabgleich gesteuert wird. Der Alarmdatenabgleich findet statt, wenn nach einer Unterbrechung der Verbindung die Kommunikation zwischen Manager und Agent wieder hergestellt ist. Nach Empfang der Anforderung sendet der Agent sukzessive die angeforderten Alarme an den Manager.

Das Dokument US 2003/0162537 A1 beschreibt ein Managementsystem, welches als Manager eine herstellerunabhängige Einrichtung umfasst. Ein Agent empfängt herstellerabhängige Informationen, welche zu dem herstellerunabhängigen Manager in einem herstellerunabhängigen Format übertragen werden.

Die ITU-T Standards (International Telecommunications Union - Telecommunication standardisation sector) der Serie X. 73x definieren für das Management von Telekommunikations-Netzen verschiedene Systemmanagementfunktionen ("Systems Management Functions"), die von Applikationsprozessen in einer zentralisierten oder dezentralisierten Management-Umgebung benutzt werden können. Das Fehler-Management (*Fault Management*) und die Behandlung von Alarmen (*Alarm handling*) als eine der wichtigsten Funktionen zur Netzüberwachung und -kontrolle erfolgt mit Hilfe von Managementeinrichtungen (ManagementSystemen). Die Managementeinrichtungen können sich dabei insbesondere auf der *Network Element Management*-Ebene (z.B. OMC, Element Manager) oder *Network Management*-Ebene (z.B. NMC, Network Manager) befinden.

In einem Telekommunikations-Netz gibt es üblicherweise eine große Anzahl von Netz-Ressourcen, die als sogenannte Objektinstanzen (MOI *Management Object Instance*) modelliert werden und Alarme generieren können. Jeder Alarm wird folglich aufgrund mindestens eines Ereignisses in mindestens einer Netz-Ressource des Kommunikationsnetzes generiert. Zwischen verschiedenen Netz-Ressourcen gibt es unterschiedliche Arten von Beziehungen, so dass beispielsweise ein Ereignis in einer Netz-Ressource eine Reihe von weiteren Ereignissen in der gleichen und/oder in anderen Netz-Ressourcen einer Netzeinheit zur Folge haben kann.

Für das Management eines gesamten Telekommunikationsnetzes sind aus betrieblicher Sicht zwei Management-Ebenen von gro-ßer Bedeutung:
- Die *"Network Element Management"*-Ebene (EM-Ebene), deren Funktionalität von (regionalen) Element Managers (üblicherweise OMCs genannt) realisiert wird, die in der Regel vom gleichen Hersteller wie die dazugehörigen Netzeinrichtungen bzw. Netzelemente (*Network Elements,* NE) geliefert werden. Die OMCs müssen alle hersteller-spezifischen Eigenschaften der Netzelemente (d.h. auch die entsprechenden Hardware-Merkmale) berücksichtigen.
- Die *"Network Management*"-Ebene (NM-Ebene), deren Funktionalität von einem Netzwerk Manager (üblicherweise NMC genannt) realisiert wird, der auch von einem Dritt-Hersteller geliefert werden kann. Um eine funktionale Integration hersteller-spezifischen Netzregionen unter einem einheitlichen NMC zu ermöglichen, muss die Schnittstelle zwischen NMC und den (regionalen) OMCs hersteller-unabhängig sein.

Die Hersteller-Unabhängigkeit der OMC-NMC-Schnittstelle kann in einer objekt-orientierten Management-Umgebung durch die exklusive Verwendung von sogenannten funktions-bezogenen Objektklassen (functional-related MOC (Management Object Class)) gewährleistet werden. Die funktionalen Objekte modellieren die Netz-Ressourcen eines Telekommunikationsnetzes aus einer funktionalen, hersteller-unabhängigen Sicht.
Im Gegensatz dazu, kennt die hersteller-spezifische Schnittstelle zwischen OMC und den Netzelementen (z.B. BSS (Base Station System) und SSS (Switching Sub-System) in einem GSM-*Netz*) auch sogenannte hardware-bezogene Objektklassen (*equipment-related* MOC), die von Hersteller zu Hersteller unterschiedlich sind. In dieser Management-Hierarchie spielt jedes hersteller-spezifische OMC eine doppelte Rolle: Manager für die NEs und Agent für das übergeordnete NMC.

Die Behandlung von Alarmen kann grundsätzlich auf beiden Management-Ebenen erfolgen:
- Auf der EM-Ebene, d.h. an einem hersteller-spezifischen OMC-System (das jeweils für eine Netzregion zuständig ist) üblicherweise an den Werktagen. Die Statusänderung eines Alarms wird in diesem Fall üblicherweise automatisch über eine entsprechende Ereignismeldung dem NMC mitgeteilt.
- Auf der NM-Ebene, d.h. an einem NMC-System, üblicherweise während der Zeit, wenn die OMCs umbesetzt sind, z. B. nachts oder an den Wochenenden. Wird hier der Status eines Alarms durch den Operator verändert, muss der untergeordnete Element Manager automatisch synchronisiert werden, damit alle Management-Systeme den gleichen Informationsstand erhalten. Für eine solche Synchronisierung definieren die jetzigen 3GPP Standards der TS 32.xxx-Reihe unterschiedliche Operationen, in denen die betroffenen Alarme einzeln spezifiziert werden müssen.
   Für eine größere Anzahl von behandelten Alarmen ist diese Art von Synchronisierung weder für die NM-EM Schnittstelle noch für die OMCs effizient.

Eine Synchronisierung von Alarmen auf EM-Ebene nach Änderung des Alarmstatus auf der NM-Ebene ist in den 3GPP Standards der TS 32.xxx-Reihe wie folgt spezifiziert:
- Für jede Art von Alarmbehandlung (Bestätigung (*acknowledgement*), Rücknahme der Bestätigung (*unacknowledgement*), Deaktivierung (clearing), Zuweisung von Alarmhinweisen (*set comments*)) wird eine andere Operation (mit jeweils anderer Syntax) definiert.
- Jeder zu synchronisierende Alarm muss in der Operation durch eine eindeutige Kennung identifiziert werden.

Damit gestaltet sich insbesondere eine Synchronisierung einer größeren Anzahl von behandelten Alarmen als aufwendig.

Der Erfindung liegt die Aufgabe zugrunde, ein Verfahren, einen Element Manager und ein Kommunikationssystem der eingangs genannten Art aufzuzeigen, durch welche die Synchronisierung vereinfacht werden kann und insbesondere es ermöglicht wird, dass eine gleichzeitige Synchronisierung mehrerer, auf der NM-Ebene behandelter Alarme mit den OMC-Systemen erfolgen kann.

Diese Aufgabe wird gemäß der Erfindung hinsichtlich des Verfahrens durch die Merkmale des Patentanspruchs 1, hinsichtlich des Element Managers durch die Merkmale des Patentanspruchs 8 und hinsichtlich des Kommunikationssystems durch die Merkmale des Patentanspruchs 12 gelöst. Weiterbildungen und Ausgestaltungen der Erfindung sind insbesondere den abhängigen Ansprüchen zu entnehmen.

Erfindungsgemäß werden
- im Element Manager (OMC) unter Berücksichtigung eines Objektmodells an der Schnittstelle zwischen Netzwerk Manager und Element Manager ein Alarm auf eine funktionale Objektklasse abgebildet,
- der Alarm vom Element Manager zum Netzwerk Manager weitergeleitet,
   im Netzwerk Manager der Alarm behandelt
   und
- es erfolgt eine Synchronisierung des Alarmstatus zwischen Netzwerk Manager und Element Manager im Element Manager anhand einer für die Schnittstelle zwischen Netzwerk Manager und Element Manager im Kommunikationssystem einheitlichen Operation.

Durch diese Maßnahme wird eine verbesserte Behandlung von Alarmen im Hinblick auf die Synchronisierung ermöglicht, indem ein allgemeingültiger, hersteller-unabhängiger Mechanismus zur Verfügung gestellt wird, der nicht nur für GSM (Global System for Mobile communication) und UMTS (Universal Mobile Telecommunication System) Mobilfunk-Netze, sondern auch für das Management von beliebigen Telekommunikationsnetzen eingesetzt werden kann. Die Erfindung erlaubt eine Behandlung von Alarmen an den Managementsystemen, welche Funktionen verschiedener Management-Ebenen realisieren, beispielsweise das Network Element Management oder das Network Management. In der Regel liegen dabei eine Vielzahl von Netzwerk Element Managern (z.B. OMCs) und eine Vielzahl von Netzwerk Managern (z.B. NMCs) vor.

Das erfindungsgemäße Verfahren ist dabei grundsätzlich für alle Telekommunikationsnetze einsetzbar. Dies umfasst ausdrücklich gerade auch nicht kabelgebundene Telekommunikationsnetze. Denn insbesondere Mobilfunknetze erfordern ein wirksames Fehler-Management.

Es werden im Element Manager in seinem logischen Funktionsteil entsprechend der Management-Funktionalität als Netzwerk Element Manager von einem Netzelement eingehende Alarme empfangen und vor der Weiterleitung an den Netzwerk Manager an den logischen Funktionsteil entsprechend der Management-Funktionalität als Agent gegenüber dem Netzwerk Manager übergeben. In beiden logischen Funktionsteilen können Informationen zum Alarm abgespeichert werden. Das Weiterleiten des Alarms vom Element Manager erfolgt nicht zwingend für alle Alarme, aber in der Regel für diejenigen Alarme, welche für den Netzwerk Manager relevant sind. Diese werden im Element Manager vor dem Weiterleiten an den Netwerk Manager auf eine funktionale Objektklasse abgebildet. Das Senden an den Netzwerk Manager erfolgt bevorzugt im wesentlichen in Echtzeit, d.h. ohne allzu große Verzögerungen. In der Regel wird der Alarm über eine Filtereinrichtung (z.B. EFD) zum Netzwerk Manager weitergeleitet. Das Senden an den Netzwerk Manager kann mittels in ihrer Tätigkeit einstellbarer und/oder variierbarer Filtereinrichtungen erfolgen. Insbesondere kann beispielsweise die Wirkung der Filtereinrichtungen vor allem im Hinblick auf das Managementsystem einstellbar und/oder variierbar gestaltet sein. Als Filtereinrichtung im Rahmen der Erfindung kann bevorzugt ein so genannter Ereignisweiterleitungs-Diskriminator (EFD *Event Forwarding Discriminator)* eingesetzt werden. Die Aufgabe der Filtereinrichtung in dieser Funktionalität (Event reporting nach ITU-T X. 734) ist es, nur diejenigen Nachrichten *(event reports)* zum Manager zu routen, welche bestimmten Filterkriterien genügen. Der Manager ist dabei in der Lage, solche EFDs im Agent einzurichten oder zu löschen und die Filterkriterien (über das discriminatorConstruct-Attribut) festzulegen. Dadurch kann jeder Manager zu jeder Zeit den Informationsfluß nach seinen individuellen Anforderungen steuern. Die Filtereinrichtung im Element Manager kann üblicherweise bezüglich ihrer Tätigkeitsinhalte vom Netzwerk Manager eingerichtet, gelöscht und/oder bezüglich ihrer Filterkriterien durch den Netzwerk Manager festgelegt werden.

In vorteilhafter Ausgestaltung der Erfindung werden im Element Manager zumindest zeitweise Informationen betreffend den Inhalt des beim Element Manager eingehenden und/oder des unter Berücksichtigung des Objektmodells an der Schnittstelle zwischen Netzwerk Manager und Element Manager auf eine funktionale Objektklasse abgebildeten Alarms abgespeichert. Bevorzugt wird von beiden genannten Möglichkeiten Gebrauch gemacht. Das umfasst im Hinblick auf die zweite geannte Möglichkeit, dass vorteilhafterweise im Element Manager (z.B. OMC) als Ereignismeldungen eingehende Alarme auf die jeweils entsprechende funktionale Objektklasse gemäß dem Informationsmodell der Schnittstelle zwischen Element Manager (in der Funktion als Agent) und Netzwerk Manager (z.B. NMC in der Funktion als Manager) umgewandelt werden.

Insbesondere können die zumindest zeitweise gespeicherten Informationen eine Alarmliste zu im Element Manager eingehenden Alarmen und eine Alarmliste zu unter Berücksichtigung des Objektmodells an der Schnittstelle zwischen Netzwerk Manager und Element Manager auf eine funktionale Objektklasse abgebildeten Alarmen umfassen.

Bevorzugt werden die im Element Manager abgespeicherten Informationen betreffend den Inhalt des beim Element Manager eingehenden und/oder des unter Berücksichtigung des Objektmodells an der Schnittstelle zwischen Netzwerk Manager und Element Manager auf eine funktionale Objektklasse abgebildeten Alarms zumindest teilweise bei der Synchronisierung mittels der einheitlichen Operation verwendet.

In Weiterbildung der Erfindung kann zur Synchronisierung mittels der einheitlichen Operation im Element Manager eine Objektinstanz als Referenzinstanz für die funktionale Objektklasse, auf welche der Alarm unter Berücksichtigung des Objektmodells an der Schnittstelle zwischen Netzwerk Manager und Element Manager abgebildet wurde, vom Netzwerk Manager zum Element Manager übermittelt wird. Dazu werden insbesondere die im Element Manager eingehenden Alarme auf die jeweils entsprechende funktionale Objektklasse gemäß dem Informationsmodell der Schnittstelle zwischen Element Manager und Netzwerk Manager umgewandelt.

Dieses Verfahren kann dadurch weitergebildet werden, dass unter Berücksichtigung der im Element Manager gespeicherten Informationen betreffend den Inhalt des beim Element Manager eingehenden und/oder des unter Berücksichtigung des Objektmodells an der Schnittstelle zwischen Netzwerk Manager und Element Manager auf eine funktionale Objektklasse abgebildeten Alarms bei der Synchronisierung eine Rückabbildung auf eine Objektinstanz des Objektmodells an der Schnittstelle zwischen Element Manager und Netzwerk Element erfolgt.

Insbesondere kann vorgesehen sein, dass bei der Synchronisierung auch eine, mehrere oder alle Objektinstanzen, welche im Objektbaum des Objektmodells an der Schnittstelle zwischen Element Manager und Netzwerk Element unterhalb der der Referenzinstanz nach dem Objektmodell an der Schnittstelle zwischen Netzwerk Manager und Element Manager entsprechenden Objektinstanz nach dem Objektmodell an der Schnittstelle zwischen Element Manager und Netzwerk Element berücksichtigt werden.

Das erfindungsgemäße Verfahren weist insbesondere folgende Vorteile auf:
- Das Verfahren definiert einen einheitlichen, optimierten Mechanismus für die Synchronisierung von mehreren Alarmen auf EM-Ebene nach deren unterschiedlichen Bearbeitung auf NM-Ebene. Sowohl die Verarbeitungsleistung im Agenten (OMC) als auch der Durchsatz der NM-EM Management-Schnittstelle wird deutlich verbessert.
- Als Grundlage des Verfahrens dient eine für beide Kommunikationsrichtungen (d.h. vom Element Manager zum Netzwerk Manager und in umgekehrter Richtung vom Netzwerk Manager zum Element Manager) verwendbare Bearbeitung (kann als *"Mapping function"* bezeichnet werden) von Alarmen unter Berücksichtigung unterschiedlicher Objektmodelle in einer Management-Hierarchie.

Der erfindungsgemäße Element Manager eines Managementsystems eines Kommunikationsnetzes zur Behandlung von Alarmen in dem Managementsystem des Kommunikationsnetzes als eine von zumindest zwei Managementeinrichtungen des Managementnetzes in verschiedenen Managementebenen ist so ausgebildet, dass dem Element Manager in seiner Funktion als Agent ein Netzwerk Manager zuordenbar ist. Im Element Manager sind erfindungsgemäß
- Mittel zum Abbilden eines Alarm auf eine funktionale Objektklasse unter Berücksichtigung eines Objektmodells an der Schnittstelle zwischen Netzwerk Manager und Element Manager,
- Mittel zum Weiterleiten des Alarms vom Element Manager zum Netzwerk Manager und
- Mittel zum Synchronisieren des Alarmstatus zwischen Netzwerk Manager und Element Manager im Element Manager anhand einer für die Schnittstelle zwischen Netzwerk Manager und Element Manager im Kommunikationssystem einheitlichen Operation nach einer Behandlung des Alarms im Netzwerk Manager
vorhanden.

Es können weiterhin Mittel zum zumindest zeitweisen Abspeichern von Informationen betreffend den Inhalt des beim Element Manager eingehenden und/oder des unter Berücksichtigung des Objektmodells an der Schnittstelle zwischen Netzwerk Manager und Element Manager auf eine funktionale Objektklasse abgebildeten Alarms vorgesehen sein.

Der Element Manager kann ferner Mittel zum Senden von im Element Manager eingehenden Alarmen an den Netzwerk Manager umfassen.

Insbesondere kann der Element Manager in seiner Tätigkeit einstellbare und/oder variierbare Filtereinrichtungen aufweisen.

Schließlich kann der Element Manager Mittel zum Empfangen einer Objektinstanz als Referenzinstanz für die funktionale Objektklasse, auf welche der Alarm unter Berücksichtigung des Objektmodells an der Schnittstelle zwischen Netzwerk Manager und Element Manager abgebildet wurde, des im Netzwerk Manager behandelten Alarms zur Synchronisierung mittels der einheitlichen Operation vom Netzwerk Manager enthalten.

Der Element Manager kann mit weiteren Mitteln zur Durchführung der oben beschriebenen Verfahren ausgestattet sein.

Das erfindungsgemäße Kommunikationssystem zur Behandlung von Alarmen durch ein Managementnetz mit zumindest zwei Managementeinrichtungen in verschiedenen Managementebenen ist so gestaltet, dass mindestens eine der zumindest zwei Managementeinrichtungen als Element Manager und mindestens eine der zumindest zwei Managementeinrichtungen als dem Element Manager in dessen Funktion als Agent zu- und übergeordneter Netzwerk Manager fungieren. Es kann Mittel zur Durchführung der oben beschriebenen Verfahren aufweisen. Insbesondere kann es einen wie oben erläuterten Element Manager enthalten.

Nachstehend wird die Erfindung anhand von Ausführungsbeispielen unter Bezugnahme auf Figuren näher erläutert.

Es zeigen:
- Fig. 1: ein Blockschaltbild eines Managementnetzes für ein Kommunikationssystem mit Agent-Manager-Beziehung zwischen Netzelementen, Betriebs- und Wartungszentren und einem Netzwerkmanagementzentrum,
- Fig. 2: eine schematische Darstellung eines Managementnetzauschnittes für ein Kommunikationssystem mit Agent-Manager-Beziehung zwischen einem Netzelement, einem Betriebs- und Wartungszentrum und einem Netzwerkmanagementzentrum mit Alarmumsetzung zwischen der Schnittstelle zwischen Element Manager und Netzelement und der Schnittstelle zwischen Netzwerk Manager und Element Manager,
- Fig. 3: ein Beispiel eines Ablauf-Schemas einer erfindungsgemäßen einer für die Schnittstelle zwischen Netzwerk Manager und Element Manager im Kommunikationssystem einheitlichen Operation,
- Fig. 4: ein Beispiel einer hierarchischen Objektbaumstruktur und
- Fig 5: eine schematische Darstellung eines Managementnetzauschnittes für ein Kommunikationssystem mit Agent-Manager-Beziehung zwischen einem Netzelement, einem Betriebs- und Wartungszentrum und einem Netzwerkmanagementzentrum mit Synchronisierung von Alarmen nach deren Behandlung im Netzwerk Manager.

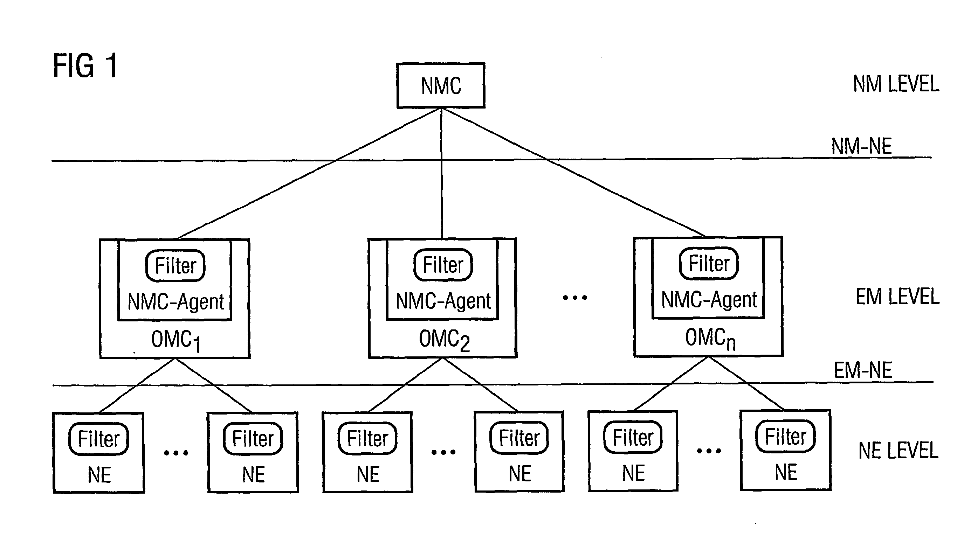

In Figur 1 ist das Blockschaltbild eines Managementnetzes für ein Mobil-Kommunikationssystem mit Agent-Manager-Beziehung zwischen einerseits Betriebs- und Wartungszentren OMC₁, OMC₂ bis OMC_{N} (OMC Operation and Maintenance Center) und Netzelementen NE (Network Elements), sowie andererseits einem Netzwerkmanagementzentrum NMC (Network Management Center) und den Betriebs- und Wartungszentren OMC₁, OMC₂ bis OMC_{N} (Operation and Maintenance Center) dargestellt. Figur 1 zeigt eine Darstellung mit drei Managementebenen NM LEVEL, EM LEVEL und NE LEVEL.

Die Managementebene EM LEVEL kennzeichnet die Netzelementsmanagementebene ("Network Element Management Level"), in der Betriebs- und Wartungszentren OMC₁, OMC₂ bis OMC_{N} jeweils die herstellerspezifische Managementfunktionalität für beispielsweise in der Managementebene NE LEVEL in Figur 1 nicht dargestellten Basisstationssysteme (z.B. BSS₁ bis BSS_{P} mit Base Station Systemen in einer Anzahl von 1 bis P) bereitstellen.

Die Managementebene NM LEVEL kennzeichnet die Netzwerkmanagementebene ("Network Management Level"), in der das Netzwerkmanagementzentrum NMC eine integrierte, vom Hersteller unabhängige Management-Funktionalität realisiert. Grundsätzlich können mehrere Netzwerkmanagementzentren NMC auf der Managementebene NM LEVEL vorhanden sein. Zwischen den Elementen unterschiedlicher Managementebenen sind definierte Schnittstellen zur Informationsübertragung vorgesehen.

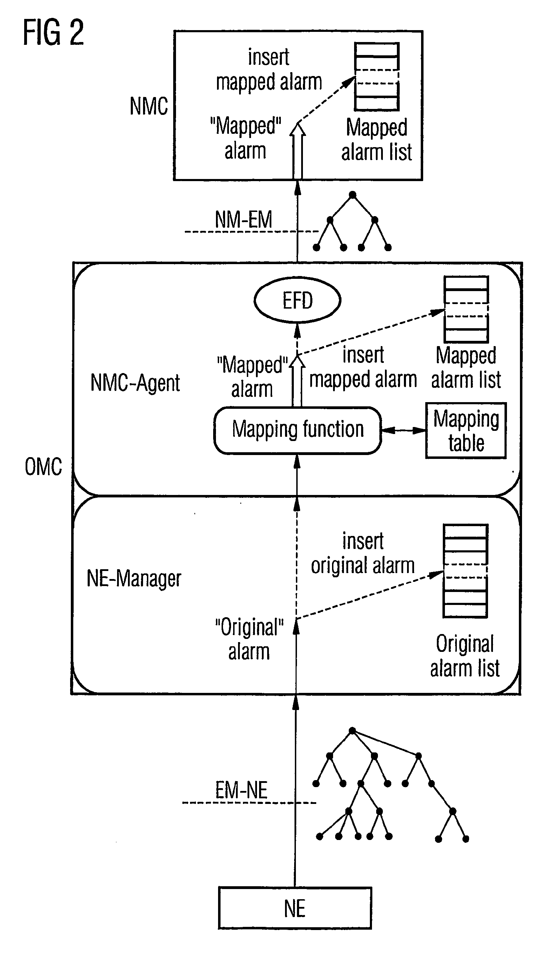

Mit dem Netzwerkmanagementzentrum NMC sind über eine (z.B. Echtzeit-) Schnittstelle NM-EM Betriebs- und Wartungszentren OMC₁, OMC₂ bis OMC_{N} verbunden. Logisch ist das Netzwerkmanagementzentrum NMC mit den NMC-Agenten der Betriebs- und Wartungszentren OMC₁, OMC₂ bis OMC_{N} verbunden. Jedes der Betriebs- und Wartungszentren OMC₁, OMC₂ bis OMC_{N} weist außerdem logisch für die Schnittstelle EM-NE zu den Netzelementen NE einen NE-Manager (in Figur 1 nicht, aber in Figur 2 dargestellt) auf. In den Netzelementen NE können - wie in Figur 1 gezeigt - Filtereinrichtungen *Filter* für die Übertragung der Alarmmeldungen zu den Betriebs- und Wartungszentren OMC₁, OMC₂ bis OMC_{N} vorgesehen sein.

Nachfolgend wird zum erfindungsgemäßen Verfahren anhand eines konkreten Beispiels die Alarmumsetzung zwischen der Schnittstelle EM-NE und der Schnittstelle NM-EM und Figur 2 erläutert.

Die Behandlung von Alarmen *(Alarm surveillance)* als eine der wichtigsten Funktionen zur Netzüberwachung und -kontrolle erfolgt auf der Netzwerk Management-Ebene (auf NM Level z.B. im Netzwerkmanagementzentrum NMC) hauptsächlich anhand der Alarmliste. Zunächst werden im logischen Teil NE-Manager des Betriebs- und Wartungszentren OMC in eine Alarmliste *"Original alarm list"* Alarminformationen abgespeichert *(insert original alarm*). Unter Berücksichtigung des Objektmodells an der Schnittstelle NM-EM muss jedes Betriebs- und Wartungszentrum OMC eine Abbildungsfunktion *Mapping function* realisieren, die alle für das Netzwerkmanagementzentrum NMC relevanten Alarme aus den Netzelementen ("Original" Alarm) auf die jeweils entsprechende funktionale Objektinstanz umsetzt. Genaue Informationen aus dem ursprünglich im Betriebs- und Wartungszentren OMC eingegangenen Alarm ("Original" Alarm), vor allem hinsichtlich der ursprünglichen ausgefallenen Netzressource, werden von der Operation *Mapping function* als Zusatzinformation in die abgebildete oder abgeleitete Alarmliste *Mapped alarm list* geschrieben (beispielsweise in einem der standardisierten Alarmparameter *additionalText* oder *additionalInformation),* wobei das Abspeichern des abgebildeten Alarms in die Alarmliste *Mapped alarm list* des NMC-Agenten durch die Operation *insert mapped alarm* in Figur 2 angedeutet wird. Vorteilhafterweise kann vorgesehen sein, dass aus einer Abbildungstabelle *Mapping table* Details zum Objektmodell an der Schnittstelle NM-EM im Hinblick auf die Abbildung mittels der Abbildungsfunktion *Mapping function* entnommen oder hinterlegt werden können.

Da die Schnittstelle zwischen NMC und den regionalen Betriebs- und Wartungszentrum OMC hersteller-unabhängig sein muss, enthält das Informationsmodell *(Information Model)* dieser Management-Schnittstelle NM-EM nur funktionale Objektklassen (MOC Management Object Class) wie folgt: Einerseits handelt es sich um sogenannte logische Objektklassen, welche die Funktionen des Telekommunikationsnetzes modellieren. Beispiele für solche logische MOCs in einem GSM Mobilfunk-Netz sind BSC, BtsSiteManager oder Transcoder. Andererseits setzt ein optimales Netz-Management voraus, dass am Netzwerkmanagementzentrum NMC auch Informationen wie z.B. Alarme über die Hardware-Betriebsbereitschaft der Netzeinheiten vorhanden sein sollen. Diese Informationen sollen dem NMC-Operator ermöglichen, die Bedeutung von Hardware-Ausfällen für die Funktionalität einer gesamten Netzeinheit korrekt einzuschätzen, um entsprechende Reparaturmaßnahmen vor Ort einzuleiten. Dies gilt vor allem, wenn die Betriebs- und Wartungszentren OMC₁, OMC₂ bis OMC_{N} unbesetzt sind und das Mobilfunk-Netz nur vom Netzwerkmanagementzentrum NMC aus überwacht wird.

Um die Netzüberwachung an einem übergeordneten Netzwerkmanagementzentrum NMC (vor allem während der Zeit mit unbesetzten Betriebs- und Wartungszentren OMC₁, OMC₂ bis OMC_{N}, z.B. nachts oder an Wochenenden) zu ermöglichen, muss - wie oben bereits ausgeführt - jedes hersteller-spezifische Betriebs- und Wartungszentren OMC eine Abbildungsfunktion *Mapping function* enthalten, die alle für das Netzwerkmanagementzentrum NMC relevanten Ereignismeldungen (*event reports)* wie Alarme aus den Netzelementen NE auf die jeweils entsprechende funktionale Objektklasse gemäß dem Informationsmodell *(Information Model)* der OMC-NMC-Schnittstelle NM-EM umwandelt. Genaue Informationen aus der ursprünglichen, in dem Netzelement NE generierten Alarmmeldung (z.B. Angaben über hersteller-spezifische Daten wie Board-Typ, Board-Nummer etc.) sind als Zusatzinformation (z.B. im standardisierten Parameter *additionalText oder additionalInformation*) in der abgebildeten Alarmmeldung (die auch als "mediierte" Alarmmeldung bezeichnet werden kann) enthalten.

Die abgebildeten bzw. umgewandelten Alarmmeldungen werden anschließend an die NMC-eigenen Filtereinrichtung EFD im logischen Teil NMC-Agent des Betriebs- und Wartungszentrums OMC weitergeroutet.

Dies ist in schematischer Darstellung des Managementnetzauschnittes für ein Kommunikationssystem mit Agent-Manager-Beziehung zwischen Netzelementen NE, einem Betriebs- und Wartungszentrum OMC und einem Netzwerkmanagementzentrum NMC in Figur 2 verdeutlicht. Die ursprüngliche Alarmmeldung von den Netzelementen NE ("Original" Alarm) wird beispielsweise im Betriebs- und Wartungszentrum OMC als Element Manager abgespeichert, mit der Abbildungsfunktion *Mapping function* in funktionale Objektklassen umgewandelt und an den Netzwerkmanagementzentrum NMC als abgebildeter Alarm ("Mapped" Alarm) unter Einsatz der in ihrer Tätigkeit einstellbaren und/oder variierbaren Filtereinrichtung EFD gesendet. Im Netzwerkmanagementzentrum erfolgt das Abspeichern des abgebildeten Alarms in eine Alarmliste *Mapped alarm* list des Netzwerkmanagementzentrum NMC durch die Operation insert *mapped alarm.*

Die unterschiedlichen, in Figur 2 in ihrer abweichenden Struktur angedeuteten Objektbäume *(containment trees)* an den Schnittstellen EM-NE bzw. NM-EM bilden die Basis für die Umsetzung von Alarmen durch die Abbildungsfunktion *Mapping function.* Da an der Schnittstelle EM-NE die Modellierung von Netzressourcen naturgemäß detaillierter sein muss (hier werden zusätzlich noch hersteller-spezifische Ressourcen verwaltet), enthält der Objektbaum der Schnittstelle EM-NE viel mehr Objektklassen als an der Schnittstelle NM-EM. Die Umsetzung von Alarmen erfolgt demzufolge in den meisten Fällen über eine n größer (oder gleich) 1 Beziehung, d.h. Alarmmeldungen von mehreren, in der EM-NE Objektbaum-Hierarchie untergeordneten Objektklassen können in Alarme einer einzigen Objektklasse an der Schnittstelle NM-EM umgesetzt werden.

Auf der Netzwerkmanagement-Ebene (NM LEVEL nach Figur 1) können die abgebildeten Alarme ("Mapped" Alarm) von NMC-Operatoren verschiedene Behandlungen erfahren, beispielsweise wie folgt:
- Der Alarm wird bestätigt (*alarm acknowledgement*)*,* d.h. der Alarm wurde zur Kenntnis genommen und Reparaturmaßnahmen wurden gegebenenfalls eingeleitet. Eine versehentlich erfolgte Alarmbestätigung kann dabei vom gleichen NMC-Operator zurückgenommen werden (a*larm unacknowledgement*).
- Der Alarm wird vom Operator manuell deaktiviert (a*larm clearing*), beispielsweise wenn die Ursache eines Alarms behoben wurde, ohne dass eine entsprechende Ereignismeldung vom Netzelement NE generiert werden konnte.
- Erläuterungen *(alarm comments)* werden einem Alarm zugewiesen, z.B. um eine bessere Koordinierung zwischen Operatoren zu ermöglichen.

Der Status von Alarmen, die auf NM-Ebene (NM LEVEL) behandelt wurden, muss anschließend auf der EM-Ebene (EM LEVEL) synchronisiert werden. Diese automatische Synchronisierung ist vor allem beim Schichtwechsel der OMC-Operatoren wichtig (z.B. jeden Morgen, wenn die Betriebs- und Wartungszentren OMC wieder besetzt werden), damit die OMC-Operatoren ein korrektes Abbild der Alarmsituation im Netz bekommen können.

Das erfindungsgemäße und im Ausführungsbeispiel näher beschriebene Verfahren ist grundsätzlich für alle Manager-Agent-Schnittstellen anwendbar. Es wird nachfolgend beispielhaft mit Ausführungen zu einer CMIP-basierten NMC-OMC-Schnittstelle NM-EM erläutert. Das Verfahren ist jedoch bei Verwendung anderer Schnittstellen-Protokolle (z.B. SNMP oder CORBA) gleichermaßen in entsprechend angepasster Form einsetzbar.

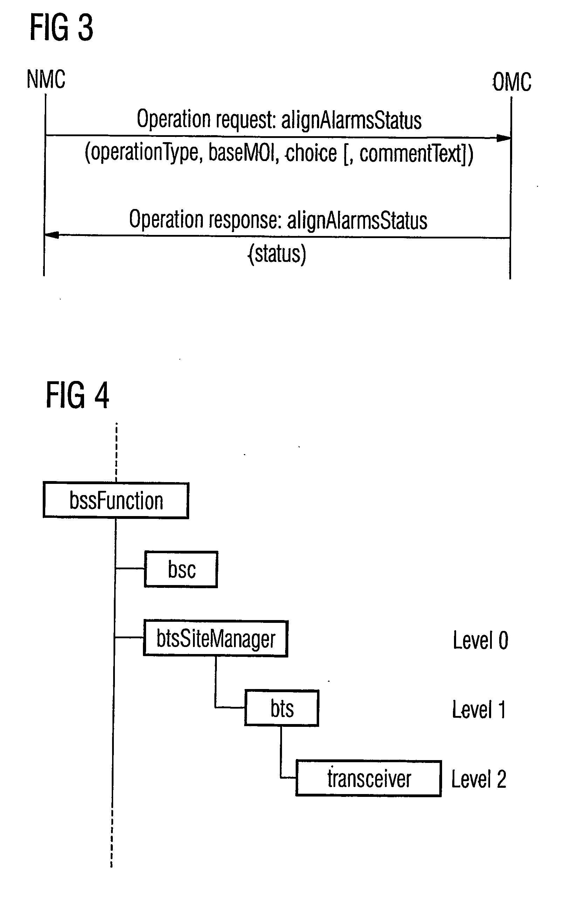

Dabei wird im Folgenden beispielhaft die Synchronisierung von Alarmen mit mehrfacher Objektauswahl (*"multiple object selection"*) betrachtet und Figur 3 erläutert.

Für die Synchronisierung von Alarmstati unterschiedlicher Objektinstanzen wird an der Schnittstelle NM-EM eine einheitliche Operation *alignAlarmsStatus* (beispielsweise in einer CMIP-basierten Management-Schnittstelle mit Hilfe des Dienstes M-ACTION gemäß ITU-T X.710 Standard) realisiert.

Diese einheitliche, in Figur 3 in ihrem Ablauf dargestellte Operation *alignAlarmsStatus* umfasst zumindest zwei Kommunikationsteile, nämlich einen Anforderungsteil (Operation request) der Operation *alignAlarmsStatus* vom Netzwerkmanagementzentrum NMC an das Betriebs- und Wartungszentrum OMC und einen Antwortteil (Operation response) der Operation *alignAlarmsStatus* vom Betriebs- und Wartungszentrum OMC an das Netzwerkmanagementzentrum NMC.

Die Operationsanforderung (*Operation request*) der einheitlichen Operation *alignAlarmsStatus* ist vorteilhafterweise durch folgende Parameter bestimmt:
➢ *operation Type:*
   Dieser Parameter definiert die Art der erforderlichen Alarmsynchronisierung am Betriebs- und Wartungszentrum OMC (*ack, unack, clear, comment*).
➢ *baseMOI*: Dieser Parameter identifiziert eine Referenzinstanz als Ausgangspunkt im Objektbaum der Schnittstelle NM-EM für die Synchronisierung der Alarmzustände. Alle gesuchten Alarme beziehen sich auf diese Referenzinstanz und gegebenenfalls - abhängig von Wert des folgenden Parameters choice - auf weitere, im Objektbaum der Referenzinstanz untergeordnete Instanzen.
➢ *choice:* Dieser Parameter spezifiziert, ausgehend von der oben genannten Referenzinstanz, für welche, im Objektbaum der Schnittstelle NM-EM untergeordnete Netzressourcen die Alarmzustände im OMC synchronisiert werden sollen. Der Parameter kann folgende Werte annehmen:
   - einen Wert *wholeSubtree*:
      Die von der Referenzinstanz und allen dieser Instanz im Objektbaum untergeordneten Objekten stammenden Alarme werden berücksichtigt.
   - einen Wert *levelNumber*:
      Es werden nur diejenigen Alarme berücksichtigt, die von den der Referenzinstanz auf dem Level n untergeordneten Objekten generiert wurden (Anmerkung: die Referenz-Objektinstanz wird beispielsweise als Level 0 definiert und jeder im Objektbaum vorhandene Level mit untergeordneten Objekten erhält entsprechend seinem Level eine natürliche Zahl n). Dieser Wert kann nur dann verwendet werden, wenn äquivalente Objektklassen auf Level n gemäß dem Wert des Parameters *levelNumber* in beiden Objektbäumen an den Schnittstellen NM-EM und EM-NE vorhanden sind.
➢ *commentText*: Dieser optionale (dies ist durch die eckigen Klammern in Figur 3 verdeutlicht) Parameter wird nur verwendet, wenn der oben genannte Parameter *operationType* den Wert comment hat und spezifiziert einen Operatorhinweis, der den ausgewählten Alarmen zugewiesen werden soll.

Die Operationsantwort (Operation response) der einheitlichen Operation *alignAlarmsStatus* ist vorteilhafterweise durch folgenden Parameter bestimmt:
➢ *status*: Dieser Parameter enthält das Ergebnis der Ausführung der Alarmsynchronisierung am Betriebs- und Wartungszentrum OMC.

Der Parameter *choice* der Operationsanforderung *(Operation* re*quest*) der einheitlichen Operation *alignAlarmsStatus* kann die Werte *wholeSubtree* und *levelNumber* annehmen. Hierzu liefert Figur 4 ein Beispiel, wobei eine an beiden Schnittstellen NM-EM und EM-NE geltende Hierarchie eines Objektbaumes dargestellt wird. Grundsätzlich gilt, dass der Objektbaum an der Schnittstelle NM-EM im Objektbaum an der Schnittstelle EM-NE mit gleicher Hierarchie enthalten ist.

Im Figur 4 gezeigten Beispiel ist die Hierachie mit folgenden absteigenden Hierarchieebenen gegeben:
- > bssFunction (BSS-Funktions-Instanz)
- > bsc (BSC-Instanz)
- > btsSiteManager (BTS-SiteManager-Instanz)
- > bts (BTS-Instanz)
- > transceiver (Transceiver-Instanz).

Unter der Annahme, dass der Parameter *baseMOI* = btsSiteManager:3 (d.h. die BTS-SiteManager-Instanz mit Nummer 3) und der Parameter choice = levelNumber (2) (d.h. es werden nur diejenigen Alarme berücksichtigt, die von den der Referenzinstanz auf dem Level 2 untergeordneten Objekten generiert wurden) ist, bedeutet dies für das dargestellte Ausführungsbeispiel, dass die Alarme aller im Objektbaum unterhalb der Instanz btsSiteManager:3 (BTS-SiteManager-Instanz mit Nummer 3) vorhandenen Transceiver-Instanzen in diesem Beispiel berücksichtigt werden.

Nach Empfang der in Figur 3 veranschaulichten Anforderung (Operation request) der einheitlichen Operation *alignAlarmsStatus* wird im Betriebs- und Wartungszentrum OMC der Status aller am Netzwerkmanagementzentrum NMC ausgewählten Alarme sowohl in der Alarmliste "Mapped alarm list" des NMC-Agents als auch in der Alarmliste "Original alarm list" des NE-Managers gemäß dem Parameterwert *operationType* synchronisiert, wobei im einzelnen bedeutet:
- *ack*: Alle Alarme werden automatisch in den Zustand "bestätigt" gesetzt,
- *unack*: Alle Alarme werden automatisch in den Zustand "nicht bestätigt" zurückgesetzt,
- *clear:* Alle Alarme werden automatisch *"cleared".* Diejenigen Alarme, die schon bestätigt waren, werden aus den Alarmlisten entfernt.
- *comment:* Jedem Alarm wird ein Operatorhinweis zugewiesen.

Der Agent sendet anschließend an den Manager (NMC) eine Antwort (Operation response), die das Ergebnis der Ausführung enthält.

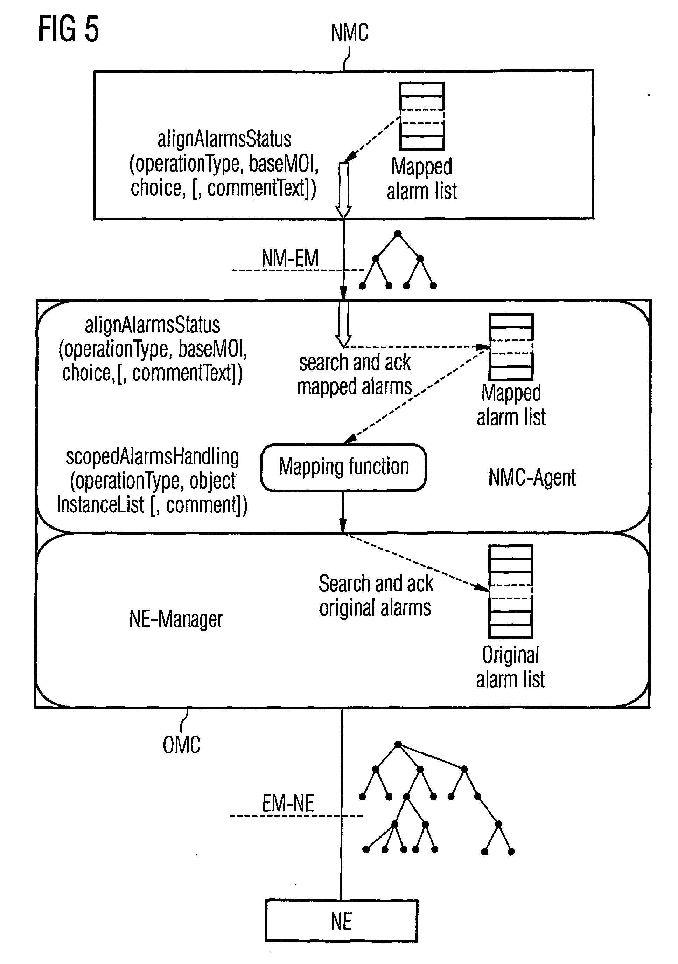

Im Zusammenhang mit Figur 5 wird nachfolgend ein Anwendungsbeispiel für eine Alarmsynchronisierung mit Alarm-Bestätigung (*alarm acknowledgement*) im OMC beschrieben, welches den Status der Alarm-Bestätigung ("acknowledgementState") synchronisiert.

Es wird angenommen, dass ein Basisstations-System (z.B. BSS-Funktions-Instanz Nr. 17 ,bssFunction:17') instand gesetzt wird und dadurch eine größere Anzahl von dazugehörigen Alarmen am Netzwerkmanagementzentrum NMC angezeigt wird. Der NMC-Operator (der den Grund für das Auftreten dieser Alarme kennt) hat alle von diesem BSS-Netzelement stammenden Alarme selektiert und bestätigt (*acknowledged*)*.*

Das NMC sendet anschließend an das die genannte Basisstation überwachende Betriebs- und Wartungszentrum OMC eine Operationsanforderung *(Operation request)* der einheitlichen Operation *alignAlarmsStatus* mit folgenden Parameterwerten:
- *operationType = ack*
- *baseMOI* = bssFunction:17
- *choice* = wholeSubtree

Der optionale Parameter *commentText* wird in diesem Beispielfall nicht verwendet.

Im Betriebs- und Wartungszentrum OMC führt der NMC-Agent folgende Schritte aus:
a) In der Alarmliste *"Mapped alarm list"* werden diejenigen Alarme gesucht, deren Objektinstanz (Parameter MOI) die Komponente (so genannten *"relative distinguished name") bssFunction:17* enthält. In jedem gefundenen abgebildeten Alarm ("Mapped" alarm) wird aus dem Parameter *additionalText* (oder *additionalInformation*) die Objektinstanz des ursprünglichen ("original") BSS-Alarms (orig-MOIₖ) ermittelt.
b) Alle in der Alarmliste *"Mapped alarm list"* des NMC-Agenten gefundenen Alarme werden automatisch bestätigt *(acknowledged).* Ist ein jetzt bestätigter Alarm nicht mehr aktiv, dann wird dieser aus der Alarmliste "Mapped alarm list" des NMC-Agenten automatisch entfernt.
c) Nachdem alle ursprünglichen ("original") Objektinstanzen des Alarms gefunden wurden, sendet der NMC-Agent an den NE-Manager im Betriebs- und Wartungszentrum OMC ein internes Kommando *scopedAlarmsHandling* mit folgenden Parameterwerten:
   - *operationType:* ack
   - *objectlnstanceList*:
      Dieser Parameter spezifiziert eine Sequenz von Objektinstanzen an der Schnittstelle EM-NE, deren Alarme bestätigt werden sollen (origMOI₁ , ..., origMOIₙ).
   (Es könnte ferner optional ein Parameter comment zur Kommentierung vorgesehen sein.)

Nach Empfang des Kommandos *scopedAlarmsHandling* führt der NE-Manager des Betriebs- und Wartungszentrums OMC folgende Schritte aus:
a) Für jede Objektinstanz origMOIk (k = l...n): alle Alarme in der Alarmliste "Original alarm list" des NE-Managers", deren Objektinstanz (Parameter MOI) den "relative distinguished name"-Wert der Objektinstanz origMOIk enthält, werden automatisch bestätigt. Dies bedeutet folgenden Vorteil: Damit werden auch Alarme von der Objektinstanz origMOIₖ bestätigt, die durch den NMC-eigenen Filter (z.B. weil diese Alarme für den NMC-Operator weniger relevant sind) absichtlich ausgefiltert worden waren.
b) Ist ein bestätigter Alarm nicht mehr aktiv, dann wird dieser aus der Alarmliste "Original alarm list" des NE-Managers automatisch entfernt.

Beispielhaft wurde oben eine Alarm-Bestätigung (*alarm acknowledgement*) durch den NMC-Operator erläutert. Für andere Behandlungsarten von mehreren Alarmen am Netzwerkmanagementzentrum NMC gilt die Prozedur sinngemäß entsprechend.

## Patentansprüche

1. Verfahren zur Behandlung von Alarmen durch ein Managementnetz eines Kommunikationssystems,
wobei das Managementnetz zumindest zwei Managementeinrichtungen (NMC, OMC₁, OMC₂, OMC_{N}; OMC) in verschiedenen Managementebenen umfasst,
wobei mindestens eine der zumindest zwei Managementeinrichtungen als Netzelementen (NE) übergeordneter Element Manager (OMC₁, OMC₂, OMC_{N}; OMC) und mindestens eine der zumindest zwei Managementeinrichtungen als dem Element Manager (OMC₁, OMC₂, OMC_{N}; OMC) in dessen Funktion als Agent zu- und übergeordneter Netzwerk Manager (NMC) fungieren,
**dadurch gekennzeichnet,**
- **dass** im Element Manager (OMC₁, OMC₂, OMC_{N}; OMC) unter Berücksichtigung eines Objektmodells an der Schnittstelle (NM-EM) zwischen Netzwerk Manager (NMC) und Element Manager (OMC₁, OMC₂, OMC_{N}; OMC) ein Alarm auf eine funktionale Objektklasse abgebildet wird,
- **dass** der Alarm vom Element Manager (OMC₁, OMC₂, OMC_{N}; OMC) zum Netzwerk Manager (NMC) weitergeleitet wird,
- **dass** im Netzwerk Manager (NMC) der Alarm behandelt wird und
- **dass** eine Synchronisierung des von dem Netzwerk Manager (NMC) gesetzten Alarmstatus des Alarms zwischen Netzwerk Manager (NMC) und Element Manager (GMC₁, OMC₂, OMC_{N}; OMC) im Element Manager (OMC₁, OMC₂, OMC_{N}; OMC) anhand einer für die Schnittstelle (NM-EM) zwischen Netzwerk Manager (NMC) und Element Manager (OMC₁, OMC₂, OMC_{N}; OMC) im Kommunikationssystem einheitlichen Operation (alignA*larmsStatus*) erfolgt.

2. Verfahren nach Anspruch 1, **dadurch gekennzeichnet, dass** im Element Manager (OMC₁, OMC₂, OMC_{N}; OMC) zumindest zeitweise Informationen betreffend den Inhalt des beim Element Manager (OMC₁, OMC₂, OMC_{N}; OMC) eingehenden und/oder des unter Berücksichtigung des Objektmodells an der Schnittstelle (NM-EM) zwischen Netzwerk Manager (NMC) und Element Manager (OMC₁, OMC₂, OMC_{N}; OMC) auf eine funktionale Objektklasse abgebildeten Alarms abgespeichert werden.

3. Verfahren nach Anspruch 2, **dadurch gekennzeichnet, dass** die zumindest zeitweise gespeicherten Informationen eine Alarmliste (*Original alarm list)* zu im Element Manager (OMC₁, OMC₂, OMC_{N}; OMC) eingehenden Alarmen und eine Alarmliste *(Mapped alarm list)* zu unter Berücksichtigung des Objektmodells an der Schnittstelle (NM-EM) zwischen Netzwerk Manager (NMC) und Element Manager (OMC₁, OMC₂, OMC_{N}; OMC) auf eine funktionale Objektklasse abgebildeten Alarmen umfasst.

4. Verfahren nach Anspruch 2 oder 3, **dadurch gekennzeichnet, dass** die im Element Manager (OMC₁, OMC₂, OMC_{N}; OMC) abgespeicherten Informationen betreffend den Inhalt des beim Element Manager (OMC₁, OMC₂, OMC_{N}; OMC) eingehenden und/oder des unter Berücksichtigung des Objektmodells an der Schnittstelle (NM-EM) zwischen Netzwerk Manager (NMC) und Element Manager (OMC₁, OMC₂, OMC_{N}; OMC) auf eine funktionale Objektklasse abgebildeten Alarms zumindest teilweise bei der Synchronisierung mittels der einheitlichen Operation (*alignAlarmsStatus*) verwendet werden.

5. Verfahren nach einem der Ansprüche 2, 3 oder 4, **dadurch gekennzeichnet, dass** zur Synchronisierung mittels der einheitlichen Operation (*alignAlarmsStatus*) im Element Manager (OMC₁, OMC₂, OMC_{N}; OMC) eine Objektinstanz als Referenzinstanz für die funktionale Objektklasse, auf welche der Alarm unter Berücksichtigung des Objektmodells an der Schnittstelle (NM-EM) zwischen Netzwerk Manager (NMC) und Element Manager (OMC₁, OMC₂, OMC_{N}; OMC) abgebildet wurde, vom Netzwerk Manager (NMC) zum Element Manager (OMC₁, OMC₂, OMC_{N}; OMC) übermittelt wird.

6. Verfahren nach Anspruch 5, **dadurch gekennzeichnet, dass** unter Berücksichtigung der im Element Manager (OMC₁, OMC₂, OMC_{N}; OMC) gespeicherten Informationen betreffend den Inhalt des beim Element Manager (OMC₁, OMC₂, OMC_{N}; OMC) eingehenden und/oder des unter Berücksichtigung des Objektmodells an der Schnittstelle (NM-EM) zwischen Netzwerk Manager (NMC) und Element Manager (OMC₁, OMC₂, OMC_{N}; OMC) auf eine funktionale Objektklasse abgebildeten Alarms bei der Synchronisierung eine Rückabbildung auf eine Objektinstanz des Objektmodells an der Schnittstelle (ME-NE) zwischen Element Manager (OMC₁, OMC₂, OMC_{N}; OMC) und Netzwerk Element (NE) erfolgt.

7. Verfahren nach Anspruch 6, **dadurch gekennzeichnet, dass** bei der Synchronisierung auch eine, mehrere oder alle Objektinstanzen, welche im Objektbaum des Objektmodells an der Schnittstelle (ME-NE) zwischen Element Manager (OMC₁, OMC₂, OMC_{N}; OMC) und Netzwerk Element (NE) unterhalb der der Referenzinstanz nach dem Objektmodell an der Schnittstelle (NM-EM) zwischen Netzwerk Manager (NMC) und Element Manager (OMC₁, OMC₂, OMC_{N}; OMC) entsprechenden Objektinstanz nach dem Objektmodell an der Schnittstelle (ME-NE) zwischen Element Manager (OMC₁, OMC₂, OMC_{N}; OMC) und Netzwerk Element (NE) berücksichtigt werden.

8. Element Manager (OMC₁, OMC₂, OMC_{N}; OMC) eines Managementsystems eines Kommunikationsnetzes zur Behandlung von Alarmen in dem Managementsystem des Kommunikationsnetzes als eine von zumindest zwei Managementeinrichtungen (NMC, OMC₁, OMC₂, OMC_{N}; OMC) des Managementnetzes in verschiedenen Managementebenen,
wobei dem Element Manager (OMC₁, OMC₂, OMC_{N}; OMC) in seiner Funktion als Agent ein Netzwerk Manager (NMC) zuordenbar ist,
**dadurch gekennzeichnet,**
- **dass** Mittel *(Mapping function)* zum Abbilden eines Alarm auf eine funktionale Objektklasse unter Berücksichtigung eines Objektmodells an der Schnittstelle (NM-EM) zwischen Netzwerk Manager (NMC) und Element Manager (OMC₁, OMC₂, OMC_{N}; OMC) vorhanden sind,
- **dass** Mittel (EFD) zum Weiterleiten des Alarms vom Element Manager (OMC₁, OMC₂, OMC_{N}; OMC) zum Netzwerk Manager (NMC) vorgesehen sind und
- **dass** Mittel *(Mapping function)* zum Synchronisieren des von dem Netzwerk Manager (NMC) gesetzten Alarmstatus des Alarms zwischen Netzwerk Manager (NMC) und Element Manager (OMC₁, OMC₂, OMC_{N}; OMC) im Element Manager (OMC₁, OMC₂, OMC_{N}; OMC) anhand einer für die Schnittstelle (NM-EM) zwischen Netzwerk Manager (NMC) und Element Manager (OMC₁, OMC₂, OMC_{N}; OMC) im Kommunikationssystem einheitlichen Operation (*alignAlarmsStatus*) nach einer Behandlung des Alarms im Netzwerk Manager (NMC) vorhanden sind.

9. Element Manager (OMC₁, OMC₂, OMC_{N}; OMC) nach Anspruch 8, **dadurch gekennzeichnet, dass** Mittel *(Original alerm list, Mapped alarm list*) zum zumindest zeitweisen Abspeichern von Informationen betreffend den Inhalt des beim Element Manager (OMC₁, OMC₂, OMC_{N}; OMC) eingehenden und/oder des unter Berücksichtigung des Objektmodells an der Schnittstelle (NM-EM) zwischen Netzwerk Manager (NMC) und Element Manager (OMC₁, OMC₂, OMC_{N}; OMC) auf eine funktionale Objektklasse abgebildeten Alarms vorhanden sind.

10. Element Manager (OMC₁, OMC₂, OMC_{N}; OMC) nach Anspruch 8, **dadurch gekennzeichnet, dass** Mittel *(Original alerm list, Mapped alarm list)* zum Empfangen einer Objektinstanz als Referenzinstanz für die funktionale Objektklasse, auf welche der Alarm unter Berücksichtigung des Objektmodells an der Schnittstelle (NM-EM) zwischen Netzwerk Manager (NMC) und Element Manager (OMC₁, OMC₂, OMC_{N}; OMC) abgebildet wurde, des im Netzwerk Manager (NMC) behandelten Alarms zur Synchronisierung mittels der einheitlichen Operation (*alignAlarmsStatus*) vom Netzwerk Manager (NMC) vorgesehen sind.

11. Element Manager (OMC₁, OMC₂, OMC_{N}; OMC) nach Anspruch 8 oder 9, **dadurch gekennzeichnet, dass** der Element Manager (OMC₁, OMC₂, OMC_{N}; OMC) Mittel zur Durchführung des Verfahrens nach einem der Ansprüche 3, 4, 6 und 7 umfasst.

12. Kommunikationssystem zur Behandlung von Alarmen durch ein Managementnetz mit zumindest zwei Managementeinrichtungen (NMC, OMC₁, OMC₂, OMC_{N}; OMC) in verschiedenen Managementebenen,
wobei mindestens eine der zumindest zwei Managementeinrichtungen als Element Manager (OMC₁, OMC₂, OMC_{N}; OMC) und mindestens eine der zumindest zwei Managementeinrichtungen als dem Element Manager (OMC₁, OMC₂, OMC_{N}; OMC) in dessen Funktion als Agent zu- und übergeordneter Netzwerk Manager (NMC) fungieren, **dadurch gekennzeichnet, dass** Mittel zur Durchführung des Verfahrens nach einem der Ansprüche 1 bis 7 vorgesehen sind.

13. Kommunikationssystem nach Anspruch 12, **dadurch gekennzeichnet, dass** es einen Element Manager (OMC₁, OMC₂, OMC_{N}; OMC) nach Anspruch 8, 9, 10 oder 11 umfasst.

## Claims

1. A method for handling alarms by means of a management network of a communication system,
wherein the management network comprises at least two management entities (NMC, OMC₁, OMC₂, OMC_{N}; OMC) at different management levels,
wherein at least one of the at least two management entities functions as an element manager (OMC₁, OMC₂, OMC_{N}; OMC) which is hierarchically higher than network elements (NE), and at least one of the at least two management entities functions as a network manager (NMC) which is hierarchically higher than and allocated to the element manager (OMC₁, OMC₂, OMC_{N}; OMC) in its function as an agent,
**characterised in that**
- an alarm is mapped onto a functional object class in the element manager (OMC₁, OMC₂, OMC_{N}; OMC) with reference to an object model at the interface (NM-EM) between network manager (NMC) and element manager (OMC₁, OMC₂, OMC_{N}; OMC),
- the alarm is forwarded from the element manager (OMC₁, OMC₂, OMC_{N}; OMC) to the network manager (NMC),
- the alarm is handled in the network manager (NMC),
- a synchronisation of the alarm status of the alarm,
which alarm status is set by the network manager (NMC), between network manager (NMC) and element manager (OMC₁, OMC₂, OMC_{N}; OMC) takes place in the element manager (OMC₁, OMC₂, OMC_{N}; OMC) on the basis of a standardised operation (*alignAlarmStatus*) for the interface (NM-EM) between network manager (NMC) and element manager (OMC₁, OMC₂, OMC_{N}; OMC) in the communication system.

2. The method as claimed in claim 1, **characterised in that** provision is made for storing within the element manager (OMC₁, OMC₂, OMC_{N}; OMC), at least occasionally, information relating to the content of the alarm which arrives at the element manager (OMC₁, OMC₂, OMC_{N}; OMC) and/or of the alarm which is mapped onto a functional object class with reference to the object model at the interface (NM-EM) between network manager (NMC) and element manager (OMC₁, OMC₂, OMC_{N}; OMC).

3. The method as claimed in claim 2, **characterised in that** the information which is at least occasionally stored includes an alarm list *(original alarm list)* for incoming alarms in the element manager (OMC₁, OMC₂, OMC_{N}; OMC) and an alarm list (*mapped alarm list*) for alarms which are mapped onto a functional object class with reference to the object model at the interface (NM-EM) between network manager (NMC) and element manager (OMC₁, OMC₂, OMC_{N}; OMC) .

4. The method as claimed in claim 2 or 3,
**characterised in that** the information that is stored in the element manager (OMC₁, OMC₂, OMC_{N}; OMC), and relates to the content of the alarm which arrives at the element manager (OMC₁, OMC₂, OMC_{N}; OMC) and/or of the alarm which is mapped onto a functional object class with reference to the object model at the interface (NM-EM) between network manager (NMC) and element manager (OMC₁, OMC₂, OMC_{N}; OMC), is used at least to some extent during the synchronisation by means of the standardised operation (*alignAlarmStatus*).

5. The method as claimed in one of the claims 2, 3 or 4, **characterised in that** for the purpose of synchronisation by means of the standardised operation *(alignAlarmStatus)* in the element manager (OMC₁, OMC₂, OMC_{N}; OMC), an object instance is transferred from the network manager (NMC) to the element manager (OMC₁, OMC₂, OMC_{N}; OMC) as a reference instance for the functional object class onto which the alarm was mapped with reference to the object model at the interface (NM-EM) between network manager (NMC) and element manager (OMC₁, OMC₂, OMC_{N}; OMC).

6. The method as claimed in claim 5, **characterised in that** with reference to the information that is stored in the element manager (OMC₁, OMC₂, OMC_{N}; OMC), and relates to the content of the alarm which arrives at the element manager (OMC₁, OMC₂, OMC_{N}; OMC) and/or of the alarm which is mapped onto a functional object class with reference to the object model at the interface (NM-EM) between network manager (NMC) and element manager (OMC₁, OMC₂, OMC_{N}; OMC), a reverse mapping takes place onto an object instance of the object model at the interface (EM-NE) between element manager (OMC₁, OMC₂, OMC_{N}; OMC) and network element (NE) during the synchronisation.

7. The method as claimed in claim 6, **characterised in that** during the synchronisation, consideration is also given to one, a plurality or all object instances which are in the object tree of the object model at the interface (EM-NE) between element manager (OMC₁, OMC₂, OMC_{N}; OMC) and network element (NE) and are below that object instance as per the object model at the interface (EM-NE) between element manager (OMC₁, OMC₂, OMC_{N}; OMC) and network element (NE) which corresponds to the reference instance as per the object model at the interface (NM-EM) between network manager (NMC) and element manager (OMC₁, OMC₂, OMC_{N}; OMC).

8. An element manager (OMC₁, OMC₂, OMC_{N}; OMC) of a management system of a communication network for handling alarms in the management system of the communication network, as one of at least two management entities (NMC, OMC₁, OMC₂, OMC_{N}; OMC) of the management network on different management levels,
wherein a network manager (NMC) can be assigned to the element manager (OMC₁, OMC₂, OMC_{N}; OMC) in its function as agent,
**characterised in that**
- means *(mapping function)* are present for mapping an alarm onto a functional object class with reference to an object model at the interface (NM-EM) between network manager (NMC) and element manager (OMC₁, OMC₂, OMC_{N}; OMC),
- means (EFD) are provided for forwarding the alarm from the element manager (OMC₁, OMC₂, OMC_{N}; OMC) to the network manager (NMC), and
- means *(mapping function)* for synchronising the alarm status of the alarm, which alarm status is set by the network manager (NMC), between network manager (NMC) and element manager (OMC₁, OMC₂, OMC_{N}; OMC) in the element manager (OMC₁, OMC₂, OMC_{N}; OMC) on the basis of a standardised operation (*alignAlarmStatus*) for the interface (NM-EM) between network manager (NMC) and element manager (OMC₁, OMC₂, OMC_{N}; OMC) in the communication system, after handling of the alarm in the network manager (NMC).

9. The element manager (OMC₁, OMC₂, OMC_{N}; OMC) as claimed in claim 8, **characterised in that** means *(original alarm list, mapped alarm list)* are provided for at least occasionally storing information relating to the content of the alarm which arrives at the element manager (OMC₁, OMC₂, OMC_{N}; OMC) and/or of the alarm which is mapped onto a functional object class with reference to the object model at the interface (NM-EM) between network manager (NMC) and element manager (OMC₁, OMC₂, OMC_{N}; OMC).

10. The element manager (OMC₁, OMC₂, OMC_{N}; OMC) as claimed in claim 8, **characterised in that** means *(original alarm list, mapped alarm list)* are provided for receiving an object instance as a reference instance for the functional object class, onto which the alarm was mapped with reference to the object model at the interface (NM-EM) between network manager (NMC) and element manager (OMC₁, OMC₂, OMC_{N}; OMC), of the alarm which was handled in the network manager (NMC) for synchronisation by means of the standardised operation (*alignAlarmStatus*) from the network manager (NMC).

11. The element manager (OMC₁, OMC₂, OMC_{N}; OMC) as claimed in claim 8 or 9, **characterised in that** the element manager (OMC₁, OMC₂, OMC_{N}; OMC) comprises means for carrying out the method in accordance one of the claims 3, 4, 6 and 7.

12. A communication system for handling alarms by means of a management network including at least two management entities (NMC, OMC₁, OMC₂, OMC_{N}; OMC) on different management levels,
wherein at least one of the at least two management entities functions as an element manager (OMC₁, OMC₂, OMC_{N}; OMC) and at least one of the at least two management entities functions as a network manager (NMC) which is hierarchically above and allocated to the element manager (OMC₁, OMC₂, OMC_{N}; OMC) in its function as an agent,
**characterised in that** means are provided for carrying out the method as claimed in one of the claims 1 to 7.

13. The communication system as claimed in claim 12,
**characterised in that** it includes an element manager (OMC₁, OMC₂, OMC_{N}; OMC) as claimed in claim 8, 9, 10 or 11.

## Revendications

1. Procédé pour traiter des alarmes par un réseau de gestion d'un système de communication,
le réseau de gestion comprenant au moins deux dispositifs de gestion (NMC, OMC₁, OMC₂, OMC_{N}; OMC) à différents étages de gestion,
au moins l'un des au moins deux dispositifs de gestion agissant en tant que gestionnaire d'éléments (OMC₁, OMC₂, OMC_{N}; OMC) supérieur à des éléments de réseau (NE) et au moins l'un des au moins deux dispositifs de gestion agissant en tant que gestionnaire de réseau (NMC) affecté au et supérieur au gestionnaire d'éléments (OMC₁, OMC₂, OMC_{N}; OMC) dans la fonction de celui-ci en tant qu'agent,
**caractérisé en ce que**
- une alarme est appliquée sur une classe d'objets fonctionnelle dans le gestionnaire d'éléments (OMC₁, OMC₂, OMC_{N}; OMC) compte tenu d'un modèle d'objet à l'interface (NM-EM) entre le gestionnaire de réseau (NMC) et le gestionnaire d'éléments (OMC₁, OMC₂, OMC_{N}; OMC),
- l'alarme est réacheminée du gestionnaire d'éléments (OMC₁, OMC₂, OMC_{N}; OMC) vers le gestionnaire de réseau (NMC),
- l'alarme est traitée dans le gestionnaire de réseau (NMC) et
- une synchronisation du statut d'alarme de l'alarme, défini par le gestionnaire de réseau (NMC), entre le gestionnaire de réseau (NMC) et le gestionnaire d'éléments (OMC₁, OMC₂, OMC_{N}; OMC) se produit, dans le gestionnaire d'éléments (OMC₁, OMC₂, OMC_{N}; OMC), à l'aide d'une opération unitaire (*alignAlarmsStatus*) pour l'interface (NM-EM) entre le gestionnaire de réseau (NMC) et le gestionnaire d'éléments (OMC₁, OMC₂, OMC_{N}; OMC) dans le système de communication.

2. Procédé selon la revendication 1, **caractérisé en ce que** sont mises en mémoire dans le gestionnaire d'éléments (OMC₁, OMC₂, OMC_{N}; OMC), du moins temporairement, des informations concernant le contenu de l'alarme intervenant dans le gestionnaire d'éléments (OMC₁, OMC₂, OMC_{N}; OMC) et/ou de l'alarme appliquée sur une classe d'objets fonctionnelle compte tenu du modèle d'objet à l'interface (NM-EM) entre le gestionnaire de réseau (NMC) et le gestionnaire d'éléments (OMC₁, OMC₂, OMC_{N}; OMC).

3. Procédé selon la revendication 2, **caractérisé en ce que** les informations stockées du moins temporairement comprennent une liste d'alarmes (*Original alarm list*) relative à des alarmes intervenant dans le gestionnaire d'éléments (OMC₁, OMC₂, OMC_{N}; OMC) et une liste d'alarmes (*Mapped alarm list*) relative à des alarmes appliquées sur une classe d'objets fonctionnelle compte tenu du modèle d'objet à l'interface (NM-EM) entre le gestionnaire de réseau (NMC) et le gestionnaire d'éléments (OMC₁, OMC₂, OMC_{N}; OMC).

4. Procédé selon la revendication 2 ou 3, **caractérisé en ce que** les informations stockées dans le gestionnaire d'éléments (OMC₁, OMC₂, OMC_{N}; OMC) et concernant le contenu de l'alarme intervenant dans le gestionnaire d'éléments (OMC₁, OMC₂, OMC_{N}; OMC) et/ou de l'alarme appliquée sur une classe d'objets fonctionnelle compte tenu du modèle d'objet à l'interface (NM-EM) entre le gestionnaire de réseau (NMC) et le gestionnaire d'éléments (OMC₁, OMC₂, OMC_{N}; OMC) sont utilisées, du moins en partie, lors de la synchronisation au moyen de l'opération unitaire (*alignAlarmsStatus*)*.*

5. Procédé selon l'une des revendications 2, 3 ou 4, **caractérisé en ce qu'**est transmise, du gestionnaire de réseau (NMC) vers le gestionnaire d'éléments (OMC₁, OMC₂, OMC_{N}; OMC), aux fins de la synchronisation au moyen de l'opération unitaire (*alignAlarmsStatus*) dans le gestionnaire d'éléments (OMC₁, OMC₂, OMC_{N}; OMC), une instance d'objet en tant qu'instance de référence pour la classe d'objets fonctionnelle sur laquelle a été appliquée l'alarme compte tenu du modèle d'objet à l'interface (NM-EM) entre le gestionnaire de réseau (NMC) et le gestionnaire d'éléments (OMC₁, OMC₂, OMC_{N}; OMC).

6. Procédé selon la revendication 5, **caractérisé en ce que**, compte tenu des informations stockées dans le gestionnaire d'éléments (OMC₁, OMC₂, OMC_{N}; OMC) et concernant le contenu de l'alarme intervenant dans le gestionnaire d'éléments (OMC₁, OMC₂, OMC_{N}; OMC) et/ou de l'alarme appliquée sur une classe d'objets fonctionnelle compte tenu du modèle d'objet à l'interface (NM-EM) entre le gestionnaire de réseau (NMC) et le gestionnaire d'éléments (OMC₁, OMC₂, OMC_{N}; OMC), il se produit, lors de la synchronisation, une application de retour sur une instance d'objet du modèle d'objet à l'interface (ME-NE) entre le gestionnaire d'éléments (OMC₁, OMC₂, OMC_{N}; OMC) et l'élément de réseau (NE).

7. Procédé selon la revendication 6, **caractérisé en ce que** sont également prises en compte, lors de la synchronisation, une, plusieurs ou toutes les instances d'objet qui sont présentes, dans l'arbre d'objets du modèle d'objet à l'interface (ME-NE) entre le gestionnaire d'éléments (OMC₁, OMC₂, OMC_{N}; OMC) et l'élément de réseau (NE) en dessous de l'instance d'objet d'après le modèle d'objet à l'interface (ME-NE) entre le gestionnaire d'éléments (OMC₁, OMC₂, OMC_{N}; OMC) et l'élément de réseau (NE), laquelle instance correspond à l'instance de référence d'après le modèle d'objet à l'interface (NM-EM) entre le gestionnaire de réseau (NMC) et le gestionnaire d'éléments (OMC₁, OMC₂, OMC_{N}; OMC).

8. Gestionnaire d'éléments (OMC₁, OMC₂, OMC_{N}; OMC) d'un système de gestion d'un réseau de communication pour traiter des alarmes dans le système de gestion du réseau de communication en tant que l'un d'au moins deux dispositifs de gestion (NMC, OMC₁, OMC₂, OMC_{N}; OMC) du réseau de gestion à différents étages de gestion,
un gestionnaire de réseau (NMC) pouvant être affecté au gestionnaire d'éléments (OMC₁, OMC₂, OMC_{N}; OMC) dans sa fonction en tant qu'agent,
**caractérisé en ce que**
- sont présents des moyens (*Mapping function*) pour appliquer une alarme sur une classe d'objets fonctionnelle compte tenu d'un modèle d'objet à l'interface (NM-EM) entre le gestionnaire de réseau (NMC) et le gestionnaire d'éléments (OMC₁, OMC₂, OMC_{N}; OMC),
- sont prévus des moyens (EFD) pour réacheminer l'alarme du gestionnaire d'éléments (OMC₁, OMC₂, OMC_{N}; OMC) vers le gestionnaire de réseau (NMC) et
- sont présents des moyens *(Mapping function)* pour synchroniser le statut d'alarme de l'alarme, défini par le gestionnaire de réseau (NMC), entre le gestionnaire de réseau (NMC) et le gestionnaire d'éléments (OMC₁, OMC₂, OMC_{N}; OMC) dans le gestionnaire d'éléments (OMC₁, OMC₂, OMC_{N}; OMC) à l'aide d'une opération unitaire (*alignAlarmsStatus*) pour l'interface (NM-EM) entre le gestionnaire de réseau (NMC) et le gestionnaire d'éléments (OMC₁, OMC₂, OMC_{N}; OMC) dans le système de communication après un traitement de l'alarme dans le gestionnaire de réseau (NMC).

9. Gestionnaire d'éléments (OMC₁, OMC₂, OMC_{N}; OMC) selon la revendication 8, **caractérisé en ce que** sont présents des moyens (*Original alarm list, Mapped alarm list*) pour mettre en mémoire, du moins temporairement, des informations concernant le contenu de l'alarme intervenant dans le gestionnaire d'éléments (OMC₁, OMC₂, OMC_{N}; OMC) et/ou de l'alarme appliquée sur une classe d'objets fonctionnelle compte tenu du modèle d'objet à l'interface (NM-EM) entre le gestionnaire de réseau (NMC) et le gestionnaire d'éléments (OMC₁, OMC₂, OMC_{N}; OMC).

10. Gestionnaire d'éléments (OMC₁, OMC₂, OMC_{N}; OMC) selon la revendication 8, **caractérisé en ce que** sont prévus des moyens (*Original alarm list, Mapped alarm list*) pour recevoir une instance d'objet, en tant qu'instance de référence pour la classe d'objets fonctionnelle sur laquelle l'alarme a été appliquée compte tenu du modèle d'objet à l'interface (NM-EM) entre le gestionnaire de réseau (NMC) et le gestionnaire d'éléments (OMC₁, OMC₂, OMC_{N}; OMC), de l'alarme traitée dans le gestionnaire de réseau (NMC) aux fins de la synchronisation au moyen de l'opération unitaire (*alignAlarmsStatus*) du gestionnaire de réseau (NMC).

11. Gestionnaire d'éléments (OMC₁, OMC₂, OMC_{N}; OMC) selon la revendication 8 ou 9, **caractérisé en ce que** le gestionnaire d'éléments (OMC₁, OMC₂, OMC_{N}; OMC) comprend des moyens pour mettre en oeuvre le procédé selon l'une des revendications 3, 4, 6 et 7.

12. Système de communication pour traiter des alarmes par un réseau de gestion comprenant au moins deux dispositifs de gestion (NMC, OMC₁, OMC₂, OMC_{N}; OMC) à différents étages de gestion,
au moins l'un des au moins deux dispositifs de gestion agissant en tant que gestionnaire d'éléments (OMC₁, OMC₂, OMC_{N}; OMC) et au moins l'un des au moins deux dispositifs de gestion agissant en tant que gestionnaire de réseau (NMC) affecté au et supérieur au gestionnaire d'éléments (OMC₁, OMC₂, OMC_{N}; OMC) dans la fonction de celui-ci en tant qu'agent, **caractérisé en ce que** sont prévus des moyens pour mettre en oeuvre le procédé selon l'une des revendications 1 à 7.

13. Système de communication selon la revendication 12, **caractérisé en que** qu'il comprend un gestionnaire d'éléments (OMC₁, OMC₂, OMC_{N}; OMC) selon la revendication 8, 9, 10 ou 11.
